(19)

Europäisches Patentamt
European Patent Office
Office européen des brevets

(11) **EP 1 937 012 A2**

(12) **EUROPEAN PATENT APPLICATION**

(43) Date of publication:
**25.06.2008 Bulletin 2008/26**

(51) Int Cl.:
***H04Q 7/36*** (2006.01)

(21) Application number: **07025001.4**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.12.2006 JP 2006344403**
**08.11.2007 JP 2007291336**

(71) Applicant: **NTT DoCoMo, Inc.**
**Chiyoda-ku**
**Tokyo 100-6150 (JP)**

(72) Inventors:
• **Takashi, Hideaki**
**Chiyoda-ku**
**Tokyo 100-6150 (JP)**

• **Takeda, Shinji**
**Chiyoda-ku**
**Tokyo 100-6150 (JP)**
• **Miura, Shunji**
**Chiyoda-ku**
**Tokyo 100-6150 (JP)**
• **Asakura, Hiromitsu**
**Chiyoda-ku**
**Tokyo 100-6150 (JP)**

(74) Representative: **HOFFMANN EITLE**
**Patent- und Rechtsanwälte**
**Arabellastrasse 4**
**81925 München (DE)**

(54) **Radio communication apparatus and radio communication method**

(57) The present invention achieves a flexible and efficient use of frequency bands in a radio communication system in which all or part of frequency bands available in a cell is allocated respectively as frequency bands available in each of a plurality of regions in the cell. An allocation control unit included in a radio communication apparatus according to the present invention is configured to allocate all the frequency band f1 to f6 available in the cell, as a frequency band available in an inner region, to allocate specific frequency bands from among all the all the frequency band f1 to f6 available in the cell, as a frequency band available in an outer region, and to notify the specific frequency band available in the outer region in field B1 to B3 corresponding to the outer region in a data frame, by using a bit map pattern.

EP 1 937 012 A2

**Description**

**CROSS REFERENCE TO RELATED APPLICATIONS**

This application is based upon and claims the benefit of priority from prior Japanese Patent Applications No. 2006-344403 filed on December 21, 2006, and 2007-291336 filed on November 8, 2007; the entire contents of which are incorporated herein by reference.

**BACKGROUND OF THE INVENTION**

**1. Field of the Invention**

The present invention relates to a radio communication apparatus and a radio communication method.

**2. Description of the Related Art**

A radio communication system using an FDMA (frequency division multiple access) method, such as an OFDMA (orthogonal frequency division multiple access) method or the like, has been conventionally known.

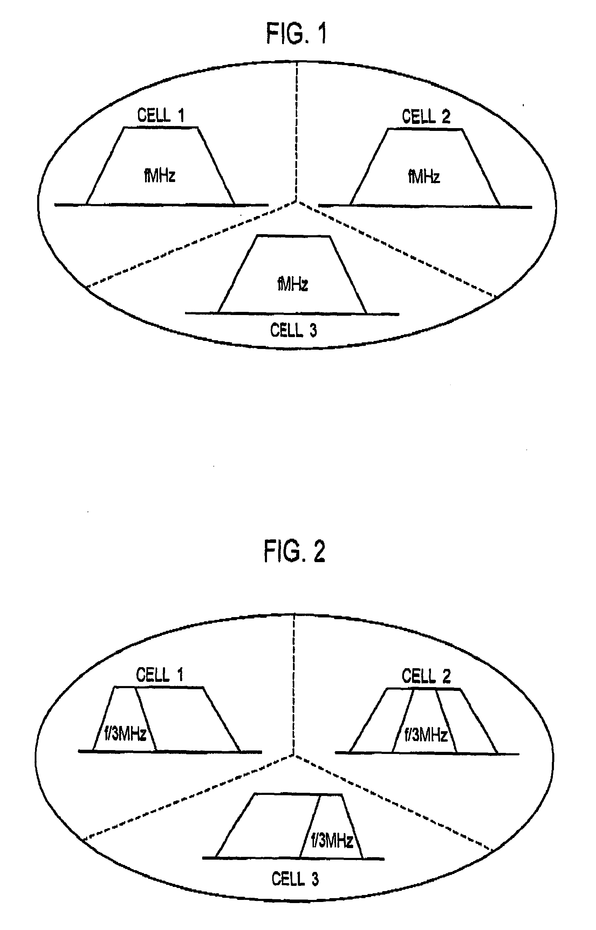

In a case where there are three adjacent cells 1 to 3 in a radio communication system using the orthogonal frequency division multiple access method, the following two configurations have been known, for example. In the first configuration, the same frequency band (f MHz) is used in each of the cells 1 to 3 (see Fig. 1). On the other hand, in the second configuration, a frequency band (f MHz) is divided into three frequency bands (f/3 MHz), and then the divided frequency bands (f/3 MHz) are respectively allocated to the cells 1 to 3 (see Fig. 2).

In the first configuration (see Fig. 1), whole range of the frequency band f MHz is used by a plurality of cells (here, the cells 1 to 3). Accordingly, when interference from other cells is small, a high peak throughput can be achieved. However, since the same frequency band is also used in the adjacent cells, the inter-cell interference becomes large.

On the other hand, in the second configuration (see Fig. 2), different frequency bands (f/3 MHz, frequency bands divided from the frequency band f MHz) are used respectively in cells adjacent to each other (here, the cells 1 to 3). Accordingly, inter-cell interference can be easily suppressed. However, since the frequency band f MHz is divided into three frequency bands f/3 MHz, the maximum peak throughput of the cell becomes one-third compared to the peak throughput of the cell using the whole range of the specific frequency band.

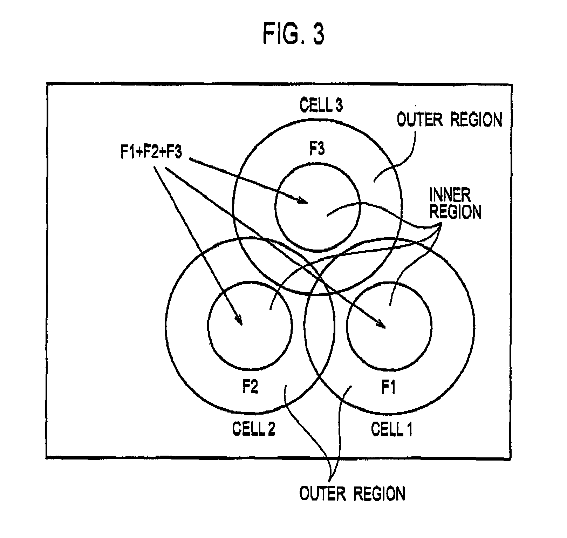

Consequently, the following configuration has been proposed. (see Japanese Patent Application Publication No. 2005-80286) In this configuration, the cells are respectively divided into an outer region and an inner region as shown in Fig. 3. Then, a frequency band "F1+F2+F3", that is commonly used in plural cells 1 to 3, is allocated to the inner regions of F1 to F3, the inner regions where interference from other cells is small. On the other hand, frequency bands "F1" "F2" and "F3", that are separately used in the respective cells 1 to 3, are respectively allocated to the corresponding outer regions where interference from other cells is large.

**SUMMARY OF THE INVENTION**

However, in the above-described conventional techniques, it has been required to previously determine whether all the frequency bands available in the cell should be allocated, or a specific frequency band from among all the frequency band available in the cell should be allocated, in each of the plurality of regions in the respective cells.

In other words, in the above-described conventional techniques, when a specific frequency band is previously allocated in a region, a subchannel in other than the specific frequency band cannot be used in the region regardless of a traffic state or the like. Therefore, the frequency band cannot be used flexibly or efficiently.

In view of the above-described problems, an object of the present Invention is to provide a radio communication apparatus and a radio communication method that can achieve flexible and efficient use of the frequency bands, in a radio communication system configured to allocate either all frequency band available in the cell or specific frequency bands from among all the frequency bands available in the cell, as the frequency band available in each of the plurality of regions in the respective cells.

A first aspect of the present application is summarized as a radio communication apparatus used in a radio communication system configured to implement a frequency division multiple access method by using a frequency division multiplex method as a modulation method and to divide a cell into at least one inner region and one outer region, including; an allocation control unit configured to respectively allocate a frequency band available in the inner region and a frequency band available in the outer region, and to create a data frame for transmitting a data burst by using a subchannel in the frequency band allocated to the inner region and a subchannel in the frequency band allocated to the outer region, wherein the allocation control unit is configured: to allocate all frequency bands available in the cell, as the frequency band available in the inner region; to allocate a specific frequency band from among all the frequency bands available in the cell, as the frequency band available in the outer region; and to notify, by using a bitmap pattern, the specific frequency band available in the outer region, in a field corresponding to the outer region in the data frame.

In the first aspect of the invention, the cell may be divided into the inner region and a plurality of outer regions, and the data frame may be configured to include the field respectively corresponding to one of the plurality of outer regions.

In the first aspect of the invention, the bitmap pattern may be configured to include a bit sequence corresponding to all the frequency bands available in the cell, and the bit sequence may be configured to include bits indicating the specific frequency band available in the outer region.

A second aspect of the present invention is summarized as a radio communication apparatus used in a radio communication system configured to implement a frequency division multiple access method by using a frequency division multiplex method as a modulation method and to divide a cell into a plurality of regions, including; an allocation control unit configured to respectively allocate a frequency band available in each of the plurality of regions, and to create a data frame for transmitting a data burst by using a subchannel in the frequency band allocated to each of the plurality of regions, wherein the allocation control unit is configured: to determine, in accordance with communication quality information received from a mobile terminal located in the cell, a specific region to which the mobile terminal should belong, from among the plurality of regions, and to allocate, in accordance with the communication quality information, the frequency band available in each of the plurality of the region.

A third aspect of the present application is summarized as a radio communication apparatus used in a radio communication system configured to implement a frequency division multiple access method by using a frequency division multiplex method as a modulation method and to divide a cell into a plurality of regions, including; an allocation control unit configured to respectively allocate a frequency band available in each of the plurality of regions, and to create a data frame for transmitting a data burst by using a subchannel in the frequency band allocated to each of the plurality of regions, wherein the allocation control unit is configured: to control a communication quality class of a mobile terminal belonging to each of the plurality of regions; and to change a size of a field respectively corresponding to each of the plurality of regions in the data frame, in accordance with the number of mobile terminals belonging to each of the plurality of regions and the communication quality class of the mobile terminals belonging to each of the plurality of regions.

In the second or third aspect of the invention, the cell may be configured to be divided into an Inner region and an outer region, and the allocation control unit may be configured to allocate all frequency bands available in the cell, as a frequency band available in the inner region, and to allocate a specific frequency band from among all the frequency bands available in the cell, as a frequency band available in the outer region.

A fourth aspect of the present invention is summarized as a radio communication method in a radio communication system configured to implement a frequency division multiple access method by using a frequency division multiplexing method as a modulation method, and to divide a cell into at least one inner region and one outer region, including; allocating, at a radio communication apparatus, a frequency band available in the outer region and a frequency band available in the inner region; and creating, at the radio communication apparatus, a data frame for transmitting a data burst by using a subchannel in the frequency band allocated to the inner region and a subchannel in the frequency band allocated to the outer region, wherein, the radio communication apparatus allocates all frequency bands available in the cell, as the frequency band available in the inner region; allocates a specific frequency band from among all the frequency bands available in the cell, as the frequency band available in the outer region; and notifies, by using a bitmap pattern, the specific frequency band available in the outer region, in a field corresponding to the outer region in the data frame.

According to the present invention, it is possible to provide a radio communication apparatus and a radio communication method that can achieve flexible and efficient use of the frequency bands, in a radio communication system configured to allocate either all frequency band available in the cell or specific frequency bands from among all the frequency bands available in the cell, as the frequency band available in each of the plurality of regions in the respective cells.

**BRIEF DESCRIPTION OF THE DRAWINGS**

Fig. 1 is a view for illustrating a method of allocating a frequency band in a radio communication system according to a conventional technique.

Fig. 2 is a view for illustrating a method of allocating a frequency band In a radio communication system according to a conventional technique.

Fig. 3 is a view for illustrating a method of allocating frequency bands In a radio communication system according to a conventional technique.

Fig. 4 is a view showing an entire configuration of a radio communication system according to a first embodiment of the present invention.

Fig. 5 is a functional block diagram of a base station according to the first embodiment of the present invention.

Fig. 6 is a view showing an example of a data frame defined by IEEE802.16e.

Fig. 7 is a view showing an example of the data frame defined by IEEE802,16e,

Fig. 8 is a view for illustrating a method of allocating frequency bands by the base station according to the first embodiment of the present invention.

Fig. 9 is an example showing a data frame used in the radio communication system according to the first embodiment of the present invention.

Fig. 10 is an example showing a "Zone Switch IE" format in the data frame used in the radio communication system according to the first embodiment of the present invention.

Fig. 11 is a view for illustrating a radio communication system according to a second embodiment of the present invention.

Fig. 12 is a view for illustrating a radio communication system according to a third embodiment of the present invention.

## DETAILED DESCRIPTION OF THE EMBODIMENTS

Hereinafter, descriptions will be given to embodiments of the present invention with reference to the accompanying drawings. In the drawings, the same or similar reference numerals and symbols are given to the same or similar elements. It should be noted that the drawings are expressed only schematically.

(First Embodiment of the Present invention)

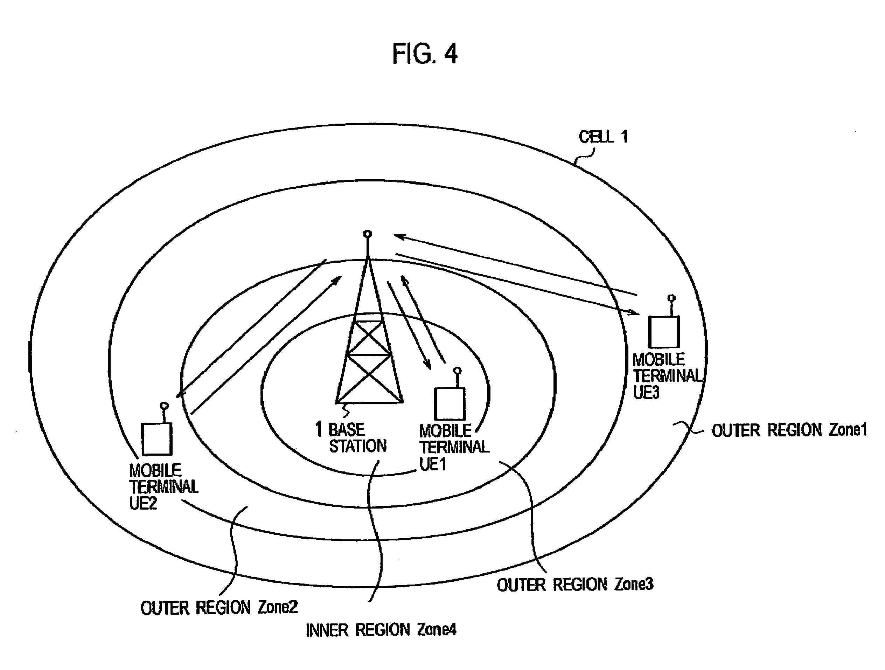

With reference to Fig. 4 to Fig. 10, a radio communication system according to the first embodiment of the present invention will be described.

The radio communication system according to a first embodiment of the present invention is a multi-user communication system using an orthogonal frequency division multiplexing (OFDM) method as a multiplexing method.

In the radio communication system according to this embodiment, part of a plurality of subcarriers included in a single communication path is allocated to a single mobile station (user), thereby an orthogonal frequency division multiple access (OFDMA) is achieved.

Such a radio communication system employing an OFDMA method is configured to transmit and receive data at high speed by using a subchannel having at least a single subcarrier.

Moreover, the radio communication system according to this embodiment is configured to divide each cell into a plurality of regions (for example, an inner region and an outer region).

In the example shown in Fig. 4, a cell 1 Is configured to be divided into outer regions Zone 1, Zone 2 and Zone 3, and an inner region Zone 4.

Further, in the example shown in Fig. 4, a base station 1 (radio communication apparatus) is located in the cell 1, a mobile terminal UE1 belongs to the inner region Zone 4, a mobile terminal UE2 belongs to the outer region Zone 2, and a mobile terminal UE3 belongs to the outer region Zone 1,

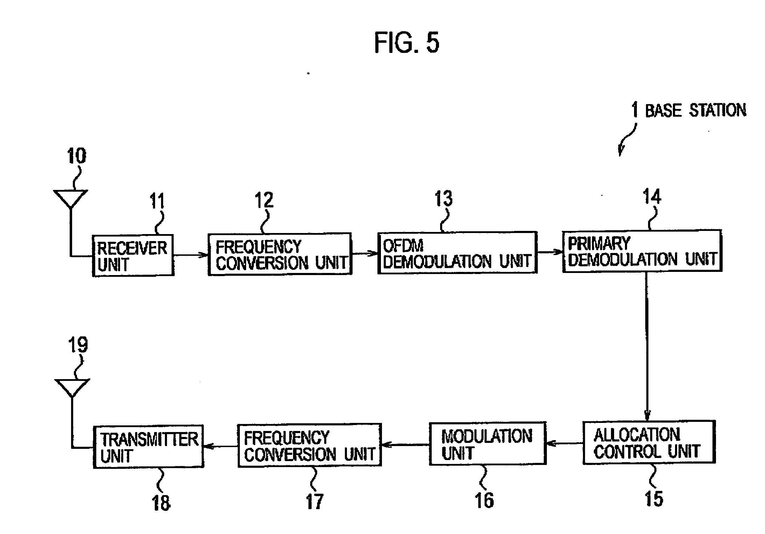

As shown in Fig. 5, the base station 1 according to this embodiment includes an antenna 10, a receiver unit 11, a frequency conversion unit 12, an OFDM demodulation unit 13, a primary demodulation unit 14, an allocation control unit 15, a modulation unit 16, a frequency conversion unit 17, a transmitter unit 18 and an antenna 19.

The receiver unit 11 is configured to receive, via the antenna 10, an uplink signal transmitted from a mobile terminal UE located in the cell 1.

The frequency conversion unit 12 is configured to perform a frequency conversion processing on the uplink signal received at the receiver unit 11.

The OFDM demodulation unit 13 is configured to perform an OFDM demodulation processing on the signal outputted from the frequency conversion unit 12.

The primary demodulation unit 14 is configured to perform a first demodulation processing on the signal outputted from the OFDM demodulation unit 13.

The allocation control unit 15 is configured to respectively allocate frequency bands available in each of a plurality of regions in the cell (for example, the inner region Zone 4 and the outer regions Zone 1 to Zone 3), and to create a data frame for transmitting a data burst by using a subchannel in the frequency band allocated in each of the plurality of regions.

In this regard, IEEE802.16e standard defines a "FUSC (full usage of subchannel) method" and a "PUSC (partial usage of subchannel) method", as the methods for forming the subchannels.

According to the FUSC method, a subchannel is formed by using all subcarriers allocated for transmitting the data burst in all the frequency bands available in each of the cell.

On the other hand, according to the PUSC method, a subchannel is formed by using part of the subcarriers from among all the subcarriers allocated for transmitting the data burst in all the frequency bands available in each of the cell.

In this embodiment, the allocation control unit 15 is configured to allocate, as a subchannel for transmitting a downlink burst data to each of the mobile terminals UE, the subchannel formed by using the "PUSC method" based on IEEE802.16e standard.

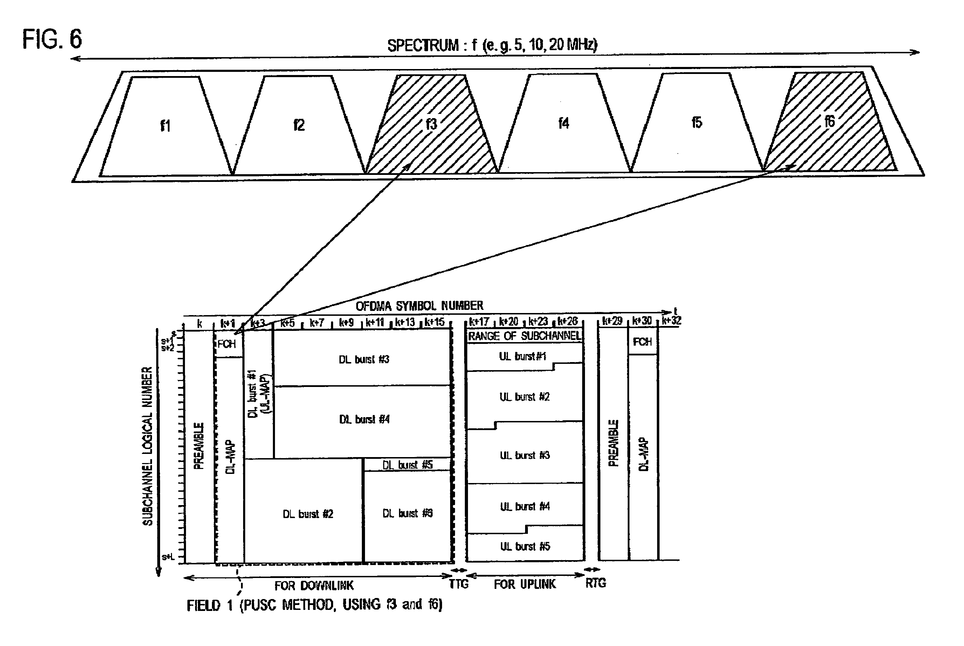

Here, a data frame defined by IEEE802.16e standard will be described with reference to Fig. 6.

In a data frame configuration shown in Fig. 6, the horizontal axis indicates OFDMA symbol numbers while the vertical axis indicates subchannel logical numbers.

As shown in Fig. 6, a downlink data frame includes a "preamble" and a "frame control header (FCH)," which follows the preamble.

In addition, "DL-MAP" and "UL-MAP (included In DL Burst#1)," which are included in the downlink data frame, respectively Includes mapping information of data bursts in the downlink data frame and mapping information of data bursts in an uplink data frame ("DL Burst" and "UL Burst").

In this embodiment, it is assumed that the frequency bands available in the cell 1 are divided into 6 frequency bands f1, f2, f3, f4, f5 and f6.

In addition, the "FCH" includes information specifying which frequency bands are to be used in a field including the "FCH", from among the divided frequency bands described above.

In the example shown in Fig. 6, the "FCH" includes information specifying that frequency bands f3 and f6 are to be used in a field 1.

When the PUSC method, which is defined by IEEE802.16e standard, is used in the field including the "FCH," a mobile terminal UE is configured to use the frequency bands specified by the "FCH" as long as the mobile terminal UE is located in a region (such as Zone 1, for example) corresponding to the field.

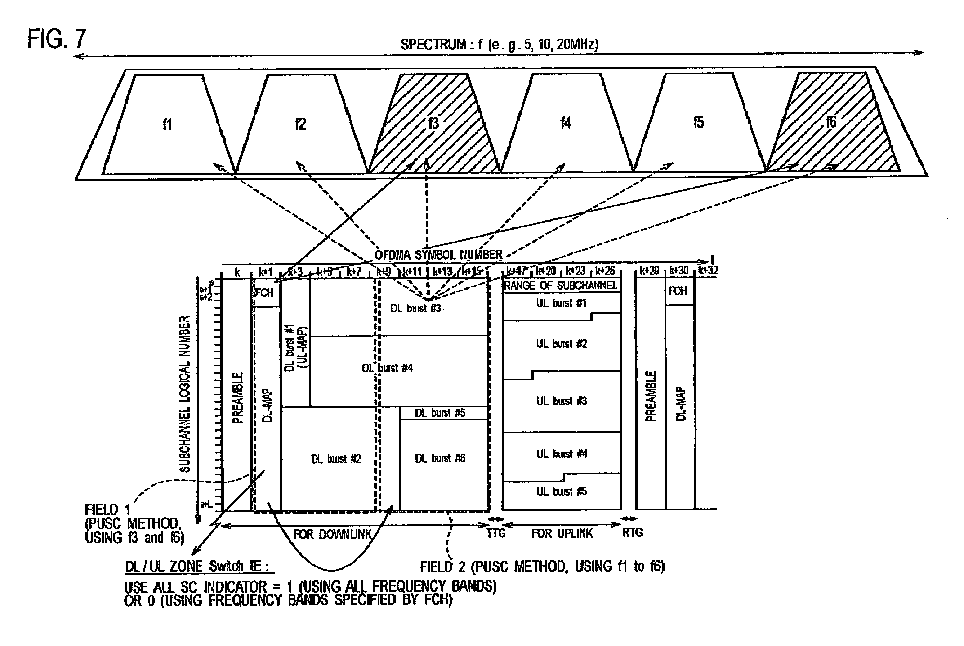

Furthermore, when the cell is divided into a plurality of regions, or more specifically, when the downlink data frame is divided into a plurality of fields 1 and 2 as shown in Fig. 7, each of the plurality of regions is required to store information in the data frame, the information indicating whether all the frequency bands available in the cell are to be used or the specific (part of) frequency bands from among all the frequency band available in the cell are to be used in each of the plurality of regions in the cell1.

Generally, when the PUSC method defined by IEEE802.16e standard is used in the downlink data frame (all of the fields), whether all the frequency band available in the cell is used, or the specific (part of) frequency band available in the cell is used, in the regions corresponding to each of the fields, is respectively determined in accordance with whether "Use All SC indicator" bit is set to "1" or "0". Here, "Use All SC indicator" bit is included in the "ZONE Switch IE", and the "ZONE Switch IE" is included in the "DL-MAP".

For example, in the example shown in Fig. 7, the field 1 is set to use specific (part of) frequency bands f3 and f6, from among all the frequency bands available in the cell 1(f1 to f6). Here, the specific frequency bands are specified by "FCH".

On the other hand, in the example shown in Fig. 7, the field 2 is set to "Use ALL SC indicator" =1. Accordingly, the field 2 is set to use all the frequency band available in the cell 1 (f1 to f6).

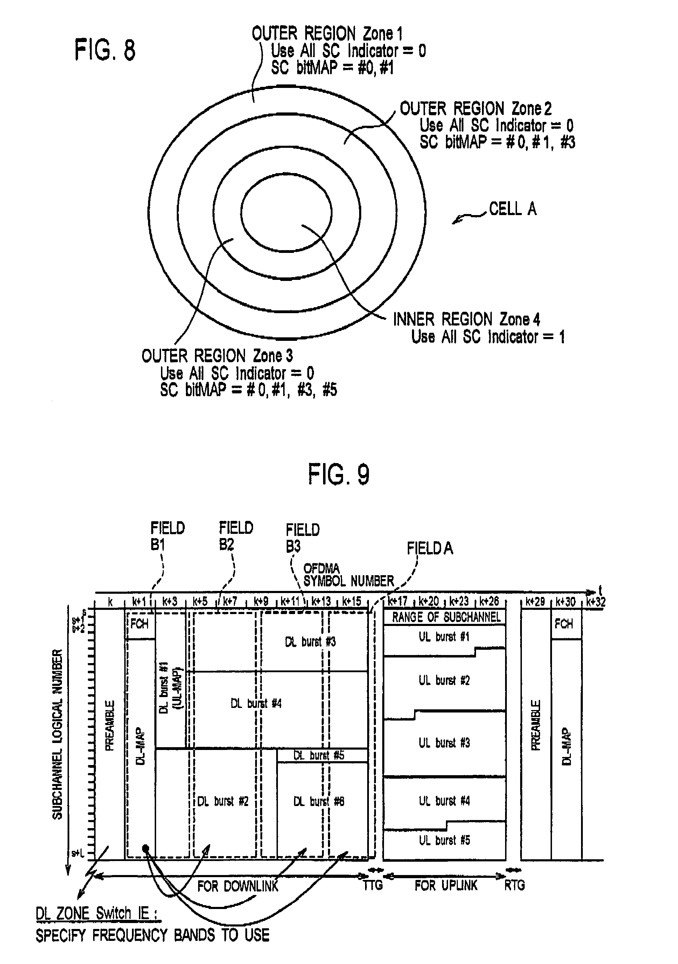

Moreover, as shown In Fig. 8, the allocation control unit 15 allocates all the frequency bands f1 to f6 available in the cell 1, as the frequency bands available in the inner region Zone 4, and respectively allocates the specific (part of) frequency bands f1 to f6 available in the cell 1, as the frequency bands available in each of the outer regions Zone 1 to Zone 3.

For example, in the example shown in Fig. 8 and Fig. 9, the allocation control unit 15 is configured to allocate; frequency bands f0 and f1 as the frequency bands available in the outer region Zone 1; frequency bands f0, f1 and f3 as the frequency bands available in the outer region Zone 2; and frequency bands f0, f1, f3 and f5 as the frequency bands available in the outer region Zone 3.

Here, the allocation control unit 15 is configured to set "Use ALL SC indicator" = 1, in a field A corresponding to the inner region Zone 4. Thereby the allocation control unit 15 notifies that all the frequency bands f1 to f6 available in the cell 1 can be used in the inner region Zone 4, to a mobile terminal UE belonging to the Inner region Zone 4.

Meanwhile, the allocation control unit 15 is configured to notify, in the field B1 to B3 corresponding to the outer regions Zone1 to 3 respectively, the specific frequency band available in the outer region Zone 1 to 3, to the mobile terminals belonging to each of the outer regions Zone 1 to 3, by using a bitmap pattern. The bit map pattern includes, for example, "Sub-Channel (SC) Bitmap", which is a syntax included In "ZONE Switch IE".

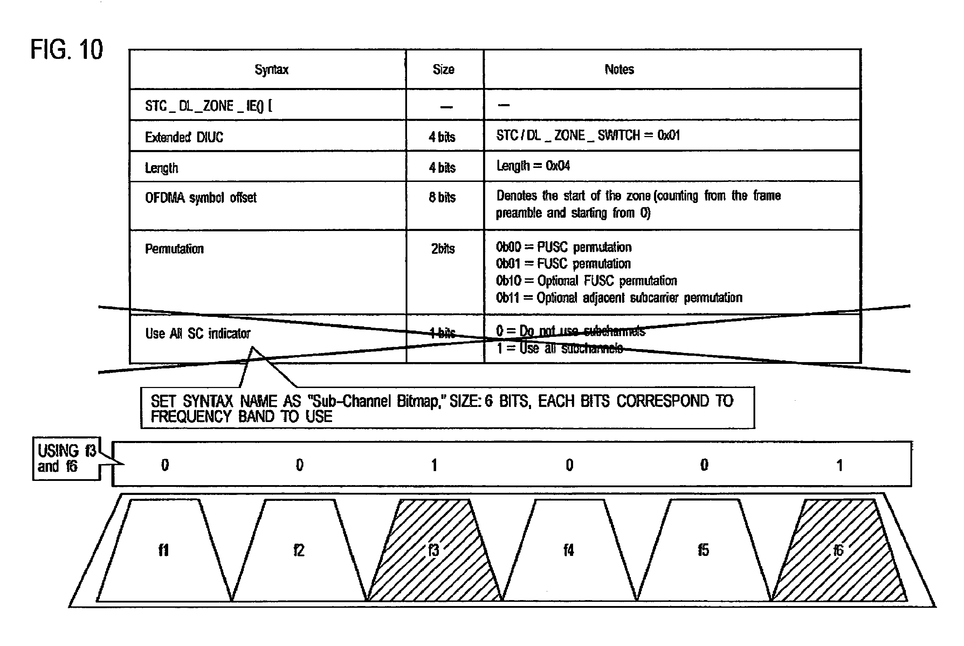

The bitmap pattern includes a bit sequence that corresponds to all the frequency bands f1 to f6 available in the cell 1 (in the example shown in Fig. 10, the bit sequence consists of 6 bits). The specific frequency bands available in each of the outer regions Zone 1 to Zone 3 are shown by means of each of the bits constituting the bit sequence.

For example, as shown in Fig. 10, when "Sub-Channel (SC) Bitmap" is set to "001001" in a certain field, the frequency bands f3 and f6 can be used in an outer region corresponding to the certain field.

The allocation control unit 15 may be configured to set "Sub-Channel (SC) Bitmap," instead of "Use All SC indicator," in the fields corresponding to the regions determined not to be allocated with all the frequency bands available in the cell 1,

Alternatively, the allocation control unit 15 may be configured to set "Use all SC indicator" to be "0," and then to set all the bits included in "Sub-channel (SC) Bitmap" to "1," in the fields corresponding to the regions determined not to be allocated with all the frequency bands available in the cell 1.

In addition, the allocation control unit 15 may be configured to set "Sub-Channel (SC) Bitmap" in the field corresponding to the region determined to be allocated with all the frequency bands available in the cell 1. In this case, allocation control unit 15 sets all the bits included in "Sub-channel (SC) Bitmap" to "1."

Further, the allocation control unit 15 is configured to transmit the created data frame to the modulation unit 16.

The modulation unit 16 is configured to modulate the downlink data in accordance with the data frame notified from the allocation control unit 15 and to generate a modulation signal.

The frequency conversion unit 17 is configured to perform a frequency conversion processing on the signal outputted from the modulation unit 16.

The transmitter unit 18 is configured to transmit the signal outputted from the frequency conversion unit 17 to each of the terminals UE via the antenna 19.

In the radio communication system in which the cell 1 is divided into the inner region Zone 4 and the outer regions Zone 1 to 3, the base station 1 of the present embodiment is able to notify that all the frequency bands f1 to f6 available in the cell 1 are to be used, by setting "Use All SC indicator" to 1 in the field corresponding to the inner region Zone 4. Further, the base station 1 of the present embodiment is able to create a data frame for notifying the specific frequency bands available in each of the outer regions Zone 1 to 3, by using "Sub-Channel (SC) Bitmap" in the field corresponding to each of the outer regions Zone 1 to 3, respectively. Therefore, flexible and efficient use of the frequency bands can be achieved.

Moreover, in a case where the cell is divided into a plurality of outer regions as well as the inner region, the base station 1 according to this embodiment is also able to allocate a specific frequency band in each of the plurality of outer regions. Even in such a case, flexible and efficient use of the frequency bands can be achieved.

Furthermore, with the base station 1 according to this embodiment, it is possible to easily set the frequency band available in each of the regions by using "Sub-Channel (SC) Bitmap" that indicates correspondence between each of the bits and the frequency bands available in each of the region.

(Second Embodiment of the present invention)

Hereinafter, a radio communication system according to a second embodiment will be described, mainly with respect to the differences between the radio communication systems according to this embodiment and the above-described first embodiment.

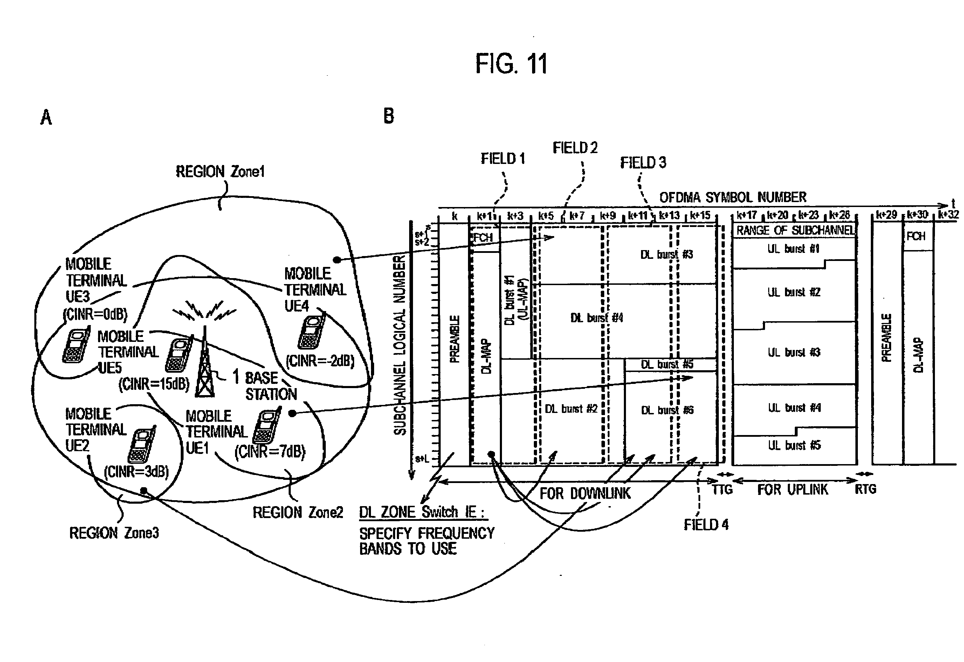

In the radio communication system according to this embodiment, a cell is configured to be divided into a plurality of regions Zone 1 to Zone 3 as shown in Fig. 11A.

In addition, in the example shown In Fig. 11A and Fig. 11B, a field 2 in a data frame corresponds to the region Zone 1, a field 4 in the data frame corresponds to the region Zone 2, and a field 3 in the data frame corresponds to the region Zone 3.

An allocation control unit 15 is configured to determine a region to which mobile terminals UE1 to UE4 should belong, from among the plurality of regions Zone 1 to Zone 3, in accordance with communication quality information received from each of the mobile terminals UE1 to UE 4 located in the cell 1,

Specifically, the allocation control unit 15 determines a region to which the mobile terminals UE1 to UE4 should belong, in a manner that the mobile terminals having similar communication quality information each other belong to the same region.

Here, the communication quality information includes such as downlink CQI (channel quality information), for example. The CQI includes a CINR (carrier-to-interference plus noise ratio), an RSSI (receiver signal strength indicator), an RTD (round trip delay), and the like.

In addition, the allocation control unit 15 is configured to allocate a frequency band available in each of the plurality of regions Zone 1 to Zone 3, in accordance with the above-described communication quality information.

Specifically, the allocation control unit 15 decreases allocated frequency bands, in a region where a mobile terminal UE having communication quality information (for example, average value of the communication quality information of the mobile terminals belonging to the region) lower than a predetermined condition (for example, the CINR is lower than a predetermined threshold value) belongs. (for example, making the region correspond to a field having a lower allocated frequency bands than a predetermined threshold value) On the other hand, the allocation control unit 15 increases allocated frequency bands, in a region where a mobile terminal US having communication information higher than a predetermined condition (for example, the CINR is higher than a predetermined threshold value) belongs. (for example, making the region correspond to a field having a larger allocated frequency bands than the predetermined threshold value)

In this embodiment, the allocation control unit 15 may also be configured to allocate all the frequency bands available in the cell, as the frequency bands available in an inner region, and to allocate a specific frequency band from among all the frequency bands available in the cell, as the frequency band available in an outer region.

In that case, the allocation control unit 15 may be configured to allocate the frequency band available in each of a plurality of outer regions, in accordance with the above-described communication quality information.

(Third Embodiment of the present invention)

Hereinafter, a radio communication system according to a third embodiment will be described, mainly with respect to the differences between the radio communication systems according to this embodiment and the above-described second embodiment.

In this embodiment, the allocation control unit 15 is configured to control a QoS class (quality of service class; communication quality class) of mobile terminals UE belonging to each of a plurality of regions Zone 1 to Zone 3.

In this embodiment, the QoS class includes "ErtPS (weighting coefficient: 5)," "UGS (weighting coefficient: 4)," "rtPS (weighting coefficient: 3)," "nrtPS (weighting coefficient: 2)" and "BE (weighting coefficient: 1)."

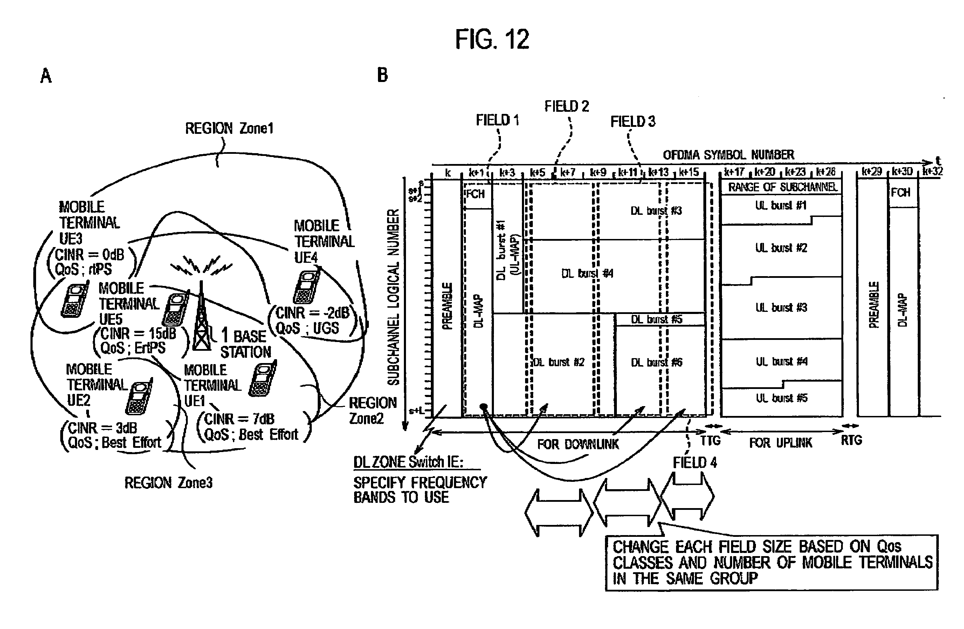

In the example shown in Fig. 12A, the QoS classes of the mobile terminals UE belonging to the region Zone 1 are "rtPS" or "UGS", the QoS classes of the mobile terminals UE belonging to the region Zone 2 are "ErtPS" or "BE (best effort)", and the QoS classes of the mobile terminals UE belonging to the region Zone 3 is "BE (best effort)."

In addition, the allocation control unit 15 is configured to change the sizes of fields 2 to 4 corresponding respectively to the plurality of regions Zone 1 to Zone 3 in a data frame, in accordance with the number of mobile terminals UE belonging to each of the plurality of regions Zone 1 to Zone 3. Further, the allocation unit 15 is also configured to change the sizes of fields 2 to 4 corresponding respectively to the plurality of regions Zone 1 to Zone 3 in a data frame, in accordance with the QoS classes of the respective mobile terminals UE belonging to each of the plurality of regions Zone 1 to Zone 3.

For example, by using the following equation, the allocation control unit 15 determines the size of the field 3 (i.e. an occupation ratio of the field 3 to the entire data frame) corresponding to the region Zone 1.

[Equation]

(Field size) = (total sum of the weighting coefficients corresponding to the QoS classes of the mobile terminals UE belonging to the region corresponding to the field) ÷ (total sum of the weighting coefficients corresponding to the QoS classes of all the mobile terminals UE located in the cell)

Accordingly, the allocation control unit 15 determines the size of the field 3 (i.e. the occupation ratio of the field 3 to the entire data frame) to be "1/2 (= {4(UGS)+3(rtPS)} + {4(UGS)+3(rtPS)+5(ErtPS)+1 (BE)x2})."

Similarly, the allocation control unit 15 determines the size of the field 2 (i.e. the occupation ratio of the field 2 to the entire data frame) to be "3/7 (= {5(ErtPS)+1(BE)} + {4(UGS)+3(rtPS)+5(ErtPS)+1 (BE)x2})."

Furthermore, the allocation control unit 15 determines the size of the field 1 (i.e. the occupation ratio of the field 1 to the entire data frame) to be "1/14 (= {1(BE)} + {4(UGS)+3(rtPS)+5(ErtPS)+1(BE)x2})."

In accordance with these results, the allocation control unit 15 dynamically changes the sizes of the respective fields in the data frame shown in Fig. 12B.

(Other Embodiments)

For example, In the above-described embodiments, the descriptions have been given to the cases where a "base station" is used as a radio communication apparatus including an allocation control unit 15. However, the radio communication apparatus including an allocation control unit 15 may be an upper-level apparatus, such as a radio control apparatus or an exchange, which controls the base station.

Moreover, in the above-described embodiments, the descriptions have been given to the examples where a cell is divided into three or four. However, the number of a plurality of regions obtained by dividing a cell is not limited to these, as long as being more than one.

Hereinabove, the present invention has been described in detail by using the above embodiments. However, it is obvious to those skilled in the art that the present invention is not limited to the embodiments described in the specification. The present invention may be implemented as an embodiment with modification or change without departing from the spirit and scope of the invention defined by the descriptions in the scope of claims. Accordingly, the descriptions in the specification are intended to be illustrative descriptions, and thus should not be understood as any limitation to the present invention.

**Claims**

1. A radio communication apparatus used in a radio communication system configured to implement a frequency division multiple access method by using a frequency division multiplex method as a modulation method and to divide a cell into at least one inner region and one outer region, comprising:

   an allocation control unit configured to respectively allocate a frequency band available in the inner region and a frequency band available in the outer region, and to create a data frame for transmitting a data burst by using a subchannel in the frequency band allocated to the inner region and a subchannel in the frequency band allocated to the outer region,

   wherein the allocation control unit is configured:

   to allocate all frequency bands available in the cell, as the frequency band available in the inner region;
   to allocate a specific frequency band from among all the frequency bands available in the cell, as the frequency band available in the outer region; and
   to notify, by using a bitmap pattern, the specific frequency band available in the outer region, in a field corresponding to the outer region in the data frame.

2. The radio communication apparatus according to claim 1, wherein

   the cell is configured to be divided into the inner region and a plurality of outer regions, and
   the data frame is configured to include the field respectively corresponding to one of the plurality of outer regions.

3. The radio communication apparatus according to claim 1, wherein

   the bitmap pattern is configured to include a bit sequence corresponding to all the frequency bands available in the cell, and
   the bit sequence includes bits indicating the specific frequency band available in the outer region.

4. A radio communication apparatus used in a radio communication system configured to implement a frequency division multiple access method by using a frequency division multiplex method as a modulation method and to divide a cell Into a plurality of regions, comprising;

   an allocation control unit configured to respectively allocate a frequency band available in each of the plurality of regions, and to create a data frame for transmitting a data burst by using a subchannel in the frequency band allocated to each of the plurality of regions,
   wherein the allocation control unit is configured:

   to determine, in accordance with communication quality information received from a mobile terminal located in the cell, a specific region to which the mobile terminal should belong, from among the plurality of regions, and
   to allocate, in accordance with the communication quality information, the frequency band available in each of the plurality of the region.

5. A radio communication apparatus used in a radio communication system configured to implement a frequency division multiple access method by using a frequency division multiplex method as a modulation method and to divide a cell into a plurality of regions, comprising;

   an allocation control unit configured to respectively allocate a frequency band available in each of the plurality of regions, and to create a data frame for transmitting a data burst by using a subchannel in the frequency band allocated to each of the plurality of regions,

wherein the allocation control unit is configured:

to control a communication quality class of a mobile terminal belonging to each of the plurality of regions; and
to change a size of a field respectively corresponding to each of the plurality of regions in the data frame, in accordance with the number of mobile terminals belonging to each of the plurality of regions and the communication quality class of the mobile terminals belonging to each of the plurality of regions.

6. The radio communication apparatus according to claim 4, wherein

the cell is configured to be divided into an inner region and an outer region, and
the allocation control unit is configured to allocate all frequency bands available in the cell, as a frequency band available in the inner region, and to allocate a specific frequency band from among all the frequency bands available in the cell, as a frequency band available in the outer region.

7. A radio communication method in a radio communication system configured to implement a frequency division multiple access method by using a frequency division multiplexing method as a modulation method, and to divide a cell into at least one inner region and one outer region, comprising,

allocating, at a radio communication apparatus, a frequency band available in the outer region and a frequency band available in the inner region; and
creating, at the radio communication apparatus, a data frame for transmitting a data burst by using a subchannel in the frequency band allocated to the inner region and a subchannel in the frequency band allocated to the outer region,
wherein, the radio communication apparatus
allocates all frequency bands available in the cell, as the frequency band available in the inner region;
allocates a specific frequency band from among all the frequency bands available in the cell, as the frequency band available in the outer region; and
notifies, by using a bitmap pattern, the specific frequency band available in the outer region, in a field corresponding to the outer region in the data frame.

## FIG. 1

## FIG. 2

# FIG. 3

# FIG. 4

CELL 1

MOBILE TERMINAL UE3

OUTER REGION Zone1

MOBILE TERMINAL UE2

1 BASE STATION

MOBILE TERMINAL UE1

OUTER REGION Zone3

OUTER REGION Zone2

INNER REGION Zone4

EP 1 937 012 A2

## FIG. 5

1 BASE STATION

RECEIVER UNIT (11) → FREQUENCY CONVERSION UNIT (12) → OFDM DEMODULATION UNIT (13) → PRIMARY DEMODULATION UNIT (14)

10

TRANSMITTER UNIT (18) ← FREQUENCY CONVERSION UNIT (17) ← MODULATION UNIT (16) ← ALLOCATION CONTROL UNIT (15)

19

EP 1 937 012 A2

FIG. 6

# FIG. 7

SPECTRUM : f (e. g. 5, 10, 20MHz)

f1  f2  f3  f4  f5  f6

OFDMA SYMBOL NUMBER

SUBCHANNEL LOGICAL NUMBER

k  k+1  k+3  k+5  k+7  k+9  k+11  k+13  k+15  k+17  k+20  k+23  k+26  k+29  k+30  k+32

s
s+2

PREAMBLE

FCH

DL-MAP

DL burst #1 (UL-MAP)

DL burst #3

DL burst #4

DL burst #2

DL burst #5

DL burst #6

RANGE OF SUBCHANNEL

UL burst #1

UL burst #2

UL burst #3

UL burst #4

UL burst #5

PREAMBLE

FCH

DL-MAP

s+L

FIELD 1
(PUSC METHOD,
USING f3 and f6)

FOR DOWNLINK

TTG  FOR UPLINK  RTG

DL / UL ZONE Switch IE :

FIELD 2 (PUSC METHOD, USING f1 to f6)

USE ALL SC INDICATOR = 1 (USING ALL FREQUENCY BANDS)
OR 0 (USING FREQUENCY BANDS SPECIFIED BY FCH)

EP 1 937 012 A2

FIG. 8

OUTER REGION Zone 1
Use All SC Indicator = 0
SC bitMAP = #0, #1

OUTER REGION Zone 2
Use All SC Indicator = 0
SC bitMAP = # 0, # 1, #3

CELL A

INNER REGION Zone 4
Use All SC Indicator = 1

OUTER REGION Zone 3
Use All SC Indicator = 0
SC bitMAP = # 0, #1, #3, #5

FIG. 9

DL ZONE Switch IE :
SPECIFY FREQUENCY BANDS TO USE

## FIG. 10

| Syntax | Size | Notes |
|---|---|---|
| STC _ DL _ZONE _ IE() [ | — | — |
| Extended DIUC | 4 bits | STC / DL _ ZONE _ SWITCH = 0x01 |
| Length | 4 bits | Length = 0x04 |
| OFDMA symbol offset | 8 bits | Denotes the start of the zone (counting from the frame preamble and starting from 0) |
| Permutation | 2 bits | 0b00 = PUSC permutation<br>0b01 = FUSC permutation<br>0b10 = Optional FUSC permutation<br>0b11 = Optional adjacent subcarrier permutation |
| Use All SC indicator | 1 bits | 0 = Do not use subchannels<br>1 = Use all subchannels |

SET SYNTAX NAME AS "Sub-Channel Bitmap," SIZE: 6 BITS, EACH BITS CORRESPOND TO FREQUENCY BAND TO USE

USING f3 and f6

| 0 | 0 | 1 | 0 | 0 | 1 |
|---|---|---|---|---|---|
| f1 | f2 | f3 | f4 | f5 | f6 |

EP 1 937 012 A2

# FIG. 11

A

B

REGION Zone1

MOBILE TERMINAL UE3 (CINR=0dB)

MOBILE TERMINAL UE5 (CINR=15dB)

MOBILE TERMINAL UE4 (CINR=-2dB)

1 BASE STATION

MOBILE TERMINAL UE2 (CINR=3dB)

MOBILE TERMINAL UE1 (CINR=7dB)

REGION Zone3

REGION Zone2

FIELD 1  FIELD 2  FIELD 3

OFDMA SYMBOL NUMBER

k  k+1  k+3  k+5  k+7  k+9  k+11  k+13  k+15  k+17  k+20  k+23  k+26  k+29  k+30  k+32

RANGE OF SUBCHANNEL

PREAMBLE  DL-MAP  DL burst #1 (UL-MAP)  DL burst #3  DL burst #4  DL burst #5  DL burst #2  DL burst #6

FCH

UL burst #1  UL burst #2  UL burst #3  UL burst #4  UL burst #5

PREAMBLE  DL-MAP  FCH

SUBCHANNEL LOGICAL NUMBER

FOR DOWNLINK  TTG  FOR UPLINK  RTG

DL ZONE Switch IE : SPECIFY FREQUENCY BANDS TO USE

FIELD 4

EP 1 937 012 A2

# FIG. 12

**B**

CHANGE EACH FIELD SIZE BASED ON QoS CLASSES AND NUMBER OF MOBILE TERMINALS IN THE SAME GROUP

OFDMA SYMBOL NUMBER

FIELD 1 | FIELD 2 | FIELD 3

PREAMBLE
FCH
DL-MAP
DL burst #1 (UL-MAP)
DL burst #4
DL burst #3
DL burst #2
DL burst #5
DL burst #6

RANGE OF SUBCHANNEL
UL burst #1
UL burst #2
UL burst #3
UL burst #4
UL burst #5

PREAMBLE
FCH
DL-MAP

FIELD 4

FOR DOWNLINK
FOR UPLINK

TTG
RTG

SUBCHANNEL LOGICAL NUMBER

DL ZONE Switch IE:
SPECIFY FREQUENCY BANDS TO USE

**A**

REGION Zone1

MOBILE TERMINAL UE3
(CINR = 0dB QoS : rtPS)

MOBILE TERMINAL UE5
(CINR = 15dB QoS : ErtPS)

1 BASE STATION

MOBILE TERMINAL UE4
(CINR = -2dB QoS : UGS)

MOBILE TERMINAL UE1
(CINR = 7dB QoS : Best Effort)

MOBILE TERMINAL UE2
(CINR = 3dB QoS : Best Effort)

REGION Zone2

REGION Zone3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006344403 A
- JP 2007291336 A
- JP 2005080286 A